# FASCICULE DE BREVET EUROPEEN

(11) **EP 4 457 074 B1**
(45) Date de publication et mention de la délivrance du brevet: **18.11.2026**
(21) Numéro de dépôt: 22844205.9
(22) Date de dépôt: 27.12.2022
(51) Int. Cl.: B29C 49/42, B29C 35/08, B29C 49/78

(54) **PROCÉDÉ DE FABRICATION DE RÉCIPIENTS ET INSTALLATION POUR SA MISE EN OEUVRE**
VERFAHREN ZUR HERSTELLUNG VON BEHÄLTERN UND ANLAGE ZUR DURCHFÜHRUNG DES VERFAHRENS
METHOD FOR PRODUCING CONTAINERS, AND FACILITY FOR IMPLEMENTING THE METHOD

(30) Priorité: 30.12.2021 FR 2114701
(43) Date de publication de la demande: 06.11.2024
(73) Titulaire: SIDEL PARTICIPATIONS, 76930 Octeville-sur-Mer (FR)
(72) Inventeur: DELAUNAY, Arnaud, 76930 Octeville-sur-Mer (FR); GENDRE, Julien, 76930 Octeville-sur-Mer (FR); PROTAIS, Pierrick, 76930 Octeville-sur-Mer (FR)
(74) Mandataire: Sidel Group
(86) Numéro de dépôt international: PCT/EP2022/087883
(87) Numéro de publication internationale: WO 2023/126406

(56) Documents cités:
- EP-B1- 2 425 959
- WO-A1-2011/047226
- DE-A1- 102017 120 201
- DE-A1- 3 619 113
- JP-B2- 5 335 028
- US-B1- 6 620 352
- US-B2- 9 346 213

## Description

**Domaine technique** : La présente invention relève du domaine de la fabrication de récipients par soufflage ou étirage-soufflage à partir de préformes en matériau thermoplastique, telle que par exemple le polyéthylène téréphtalate, ci-après « PET ». Elle a pour objet un procédé de fabrication de récipients à partir de préformes et une installation mettant en œuvre un tel procédé.

**Etat de la technique** : Au sens de la présente invention, le récipient est une bouteille ou un flacon. La fabrication de tels récipients nécessite une installation comprenant une unité de chauffe et une unité de formage, équipée d'une succession de moules à l'empreinte du modèle de récipient à former et de dispositifs d'injection correspondants.

L'installation de fabrication comprend généralement une unité de contrôle à partir de laquelle de nombreux paramètres relatifs à l'unité de chauffe peuvent être ajustés manuellement, par exemple : température de chauffe, vitesse de défilement des préformes, puissance d'une ventilation assurant l'évacuation d'une partie de la chaleur, etc.

De manière connue, la fabrication de récipients en matériau thermoplastique comporte deux phases principales. La première phase est une phase de conditionnement thermique des préformes, au cours de laquelle une succession de préformes est chauffée à une température de référence. Cette étape permet aux préformes d'être dans un état malléable dans lequel elles peuvent ensuite être formées. La seconde phase est une phase de formage, au cours de laquelle chaque préforme préalablement chauffée est transférée dans un moule à empreinte de l'unité de formage pour permettre l'injection d'un fluide sous pression dans chaque préforme par le dispositif d'injection correspondant, aussi appelé tuyère, pour conférer à la préforme la forme finale du récipient. Le fluide sous pression est par exemple un gaz, tel que de l'air. La phase de formage inclut généralement une phase d'étirage réalisée au moyen d'une tige mobile agencée pour appliquer une force d'étirage sur le fond d'une préforme dans un moule afin d'étirer la préforme selon son axe, ce qui contribue à maintenir la préforme centrée par rapport au moule.

Le procédé de fabrication nécessite de nombreux essais préliminaires avant l'obtention d'un récipient jugé conforme, c'est-à-dire d'un récipient qui respecte l'ensemble des critères de qualité définis préalablement par un cahier des charges. L'opération est fastidieuse et longue à mettre en œuvre, car il est indispensable d'ajuster chacun des paramètres de l'installation et du procédé afin de garantir la conformité du récipient. En outre, cette étape préliminaire doit être réalisée pour chaque format de récipient. Le format d'un récipient peut notamment être défini par la hauteur, la forme, le volume, la matière de ce dernier.

La mise au point du procédé de fabrication et le paramétrage de l'installation associée nécessite donc la présence d'un opérateur ayant une bonne connaissance de l'installation, du procédé, et des modèles de préformes susceptibles d'être introduites dans ladite installation afin d'obtenir un récipient conforme au format souhaité. Cette mise au point nécessite également un temps important, qui impacte directement le volume de production de la ligne.

Le récipient obtenu sera ensuite évalué pour déterminer s'il satisfait ou non aux critères, et ceci tout au long de la phase de production.

Par exemple, un critère de qualité pour juger de la conformité d'un récipient peut être la répartition de la matière le long de la hauteur du récipient, pour un format déterminé. De manière connue, un des paramètres du procédé de fabrication qui impacte ce critère est le conditionnement thermique des préformes.

Si ce critère de répartition de la matière n'est pas jugé conforme, l'opérateur doit ajuster différents paramètres afin de corriger le défaut, soit durant la phase de conditionnement thermique, soit durant la phase de formage, ou les deux. En outre, les modifications effectuées ne doivent pas conduire à l'apparition d'autres défauts ou problèmes.

Il existe donc un besoin pour optimiser le procédé de fabrication en simplifiant le pilotage des différentes étapes et le paramétrage de l'installation. Notamment, il existe un besoin pour mieux maîtriser la phase de conditionnement thermique des préformes pour corriger de manière plus ciblée les paramètres mis en cause lors de cette étape, afin de raccourcir le temps nécessaire pour obtenir un premier récipient conforme pour un nouveau format.

Il est indispensable de pouvoir corriger rapidement et précisément un défaut détecté au cours de la fabrication de récipients et donc d'ajuster les différents paramètres de manière efficace, afin de ne pas impacter le flux de production.

Arrière-plan technique : Le document US20110260350 propose de modifier la puissance globale de la cavité de chauffe, sans agir de manière spécifique sur la zone au niveau de laquelle un défaut a été détecté. Ainsi, le conditionnement thermique n'est pas ajusté de manière suffisamment précise. En effet, comme il sera décrit plus loin, un récipient peut être partiellement conforme, à un niveau de hauteur donné, par exemple au niveau de son corps, et non conforme à un autre niveau. Il peut également être entièrement non conforme. La méthode de correction proposée par ce document ne permet pas d'optimiser le processus de fabrication de manière satisfaisante. Par ailleurs, cela ne permet pas d'éviter l'apparition de nouveaux défauts, qui seront induits par les corrections elles-mêmes.

Les solutions actuelles sont insuffisantes car elles ne permettent pas à l'opérateur d'optimiser la phase de chauffe de la préforme de manière directe et rapide. Les informations à sa disposition ne permettent pas une correction du défaut tout en évitant de faire apparaître d'autres problèmes, par exemple à d'autres niveaux de hauteur du récipient.

Le document US 6 620 352 B1 décrit le préambule des revendications 1 et 7.

Résumé de l'invention : Dans le domaine de l'invention, il est donc nécessaire de mettre au point un procédé de fabrication par moulage ou par étirage soufflage de récipients, rapide à mettre en œuvre, ne nécessitant pas une phase de mise au point trop longue, et pouvant être adapté aisément en cas de changement de format ou de l'apparition d'un nouveau défaut.

L'invention vise ainsi à fournir un procédé de fabrication de récipients à la fois fiable et aisé à mettre en œuvre.

L'invention vise également l'installation permettant la mise en œuvre de ce procédé.

Ainsi, lors d'un changement de format ou de l'apparition d'un défaut, le procédé sera adapté en conséquence et le flux de production de récipients conformes pourra reprendre rapidement.

**Brève description de** l'invention : Pour ce faire, l'invention propose une solution visant à allouer les moyens de chauffe d'un échantillon d'une préforme à des sections définies d'un récipient, afin de permettre un pilotage plus précis du conditionnement thermique au cours de la fabrication d'un récipient par moulage. Le fait de connaître précisément quels sont les moyens de chauffe attribués à une section donnée du récipient permet de corriger la puissance de chaque moyen de chauffe en fonction des défauts détectés au niveau d'une ou de plusieurs sections. Dans le cadre de l'invention, on va pouvoir établir l'impact précis des moyens de chauffe lors du conditionnement thermique d'un échantillon, d'une préforme, sur des sections définies du récipient obtenu. En d'autres termes, on saura précisément quels sont les moyens de chauffe qui influencent directement la conformité d'une section d'un récipient.

A cet effet, l'invention vise un procédé de fabrication de récipients à partir de préformes, lesdits récipients pouvant présenter différents formats, chaque format de récipient présentant au moins trois sections le long de la hauteur du récipient, qui comprend au moins les étapes suivantes de :
- conditionnement thermique d'une préforme en un matériau thermoplastique, ledit conditionnement thermique étant réalisé par au moins une unité de chauffe comprenant au moins un module de chauffe, ledit module de chauffe comprenant plusieurs moyens de chauffe positionnés les uns au-dessus des autres ;
- moulage par soufflage ou étirage-soufflage du récipient au moyen d'une unité de formage de récipients.

Le procédé se caractérise en ce qu'il comprend une étape d'étalonnage pour au moins un des formats de récipient comprenant la succession d'actions suivantes :
- fourniture d'un échantillon de préforme pour ledit format ;
- apposition sur ledit échantillon de au moins deux repères répartis le long de la hauteur dudit échantillon, chacun des au moins deux repères étant associé à au moins un moyen de chauffe ;

- conditionnement thermique dudit échantillon et soufflage dudit échantillon pour obtenir un récipient selon ledit format,
- relevé de la position des repères sur ledit récipient obtenu ;
- attribution de chacun des moyens de chauffe à au moins une des trois sections, en fonction de la position des repères sur ledit récipient obtenu.

Préalablement au lancement d'un cycle de production d'un format de récipients, il est avantageux, lors d'une étape d'étalonnage, de tester les paramètres de production du procédé au moyen d'un ou plusieurs échantillons d'une préforme. L'échantillon de préforme correspond à la préforme pour le récipient à obtenir. En d'autres termes, l'échantillon est représentatif des préformes qui seront utilisées pour le cycle de production de récipients, il possède les mêmes caractéristiques. En somme, un échantillon est un exemplaire d'une préforme pour un format donné d'un récipient.

Selon l'invention, l'utilisation d'un échantillon lors de l'étape d'étalonnage permet de connaître l'impact, lors du conditionnement thermique de la préforme pour un format donné d'un récipient, d'un ou plusieurs moyens de chauffe sur différentes sections du récipient. En d'autres termes, il est alors possible, de manière avantageuse, de savoir quels sont les moyens de chauffe associés directement à la fabrication d'une ou plusieurs sections données d'un récipient : quels sont les moyens de chauffe qui agissent directement par exemple au niveau du fond du récipient, de son corps, etc. Cela permet alors d'identifier facilement et rapidement l'une des causes possibles d'un défaut d'un récipient.

L'invention concerne également un procédé fabrication de récipients qui comprend une étape de contrôle de l'épaisseur de la paroi des récipients au niveau des sections, ledit contrôle étant réalisé au moyen d'une unité de contrôle, ladite unité comprenant des moyens de détection comprenant au moins deux capteurs et l'étape de contrôle comprenant la comparaison de ladite mesure d'épaisseur à une valeur de consigne.

Selon une caractéristique additionnelle, pour au moins une section, l'épaisseur est mesurée par le capteur qui lui correspond, au niveau de la limite inférieure et/ou de la limite supérieure de ladite section.

Selon d'autres modes de réalisation, le procédé de fabrication comprend une étape automatique de réglage de la puissance d'au moins un moyen de chauffe en fonction de l'épaisseur mesurée pour la section à laquelle ledit moyen est attribué.

Selon d'autres modes de réalisation, l'étape d'apposition de repères sur l'échantillon consiste à procéder à un marquage laser sur la circonférence dudit échantillon à au moins deux hauteurs.

Selon encore d'autres modes de réalisation, lors du conditionnement thermique, chaque repère apposé sur la préforme est en vis-à-vis d'un moyen de chauffe, en particulier en vis-à-vis du moyen de chauffe auquel il est associé.

L'invention a aussi pour objet une installation de fabrication de récipients pour la mise en œuvre du procédé.

L'invention concerne une installation de fabrication de récipients en matière thermoplastique selon le procédé de fabrication de l'invention, lesdits récipients pouvant présenter différents formats, chaque format de récipient présentant au moins trois sections le long de la hauteur du récipient, ladite installation comprenant :
- une unité de chauffe comprenant au moins un module de chauffe, ledit module de chauffe comprenant plusieurs moyens de chauffe positionnés les uns au-dessus des autres,
- une unité de formage de récipients, comprenant au moins un poste de formage, ledit poste de formage incluant chacun un moule à l'empreinte d'un récipient, et au moins un dispositif d'injection d'un fluide sous pression dans la préforme.

L'installation se caractérise en ce qu'elle comprend des moyens d'étalonnage comprenant des moyens d'apposition, sur un échantillon de préforme, d'au moins deux repères distants l'un de l'autre le long de la hauteur dudit échantillon et des moyens d'attribution de chacun des moyens de chauffe à au moins une des trois sections en fonction de la position des repères sur ledit récipient obtenu à la sortie de l'unité de formage.

Selon une caractéristique additionnelle, l'installation comprend une unité de contrôle de l'épaisseur de la paroi des récipients à au moins deux niveaux de hauteur, ladite unité de contrôle comprenant des moyens de détection, lesdits moyens de détection comprenant au moins deux capteurs situés l'un au-dessus de l'autre chacun à un niveau de hauteur respectif dudit récipient et ladite unité de contrôle comprenant un système de commande automatique.

Selon certains modes de réalisation, l'unité de contrôle forme les moyens d'attribution et les moyens de détection.

Selon d'autres modes de réalisation, les moyens d'étalonnage comprennent des moyens de marquage laser d'au moins deux repères sur la circonférence de l'échantillon.

Dans certains modes de réalisation, dans l'unité de conditionnement, chaque repère sur l'échantillon est en vis-à-vis d'un moyen de chauffe, en particulier en vis-à-vis du moyen de chauffe auquel il est associé.

Selon une autre caractéristique, les moyens d'étalonnage comprennent des moyens de marquage laser d'au moins deux repères sur la circonférence de la préforme à au moins deux hauteurs.

Selon certains modes de réalisation, les moyens d'étalonnage comprennent des moyens d'impression par jet d'encre d'au moins deux repères sur la circonférence de la préforme à au moins deux hauteurs.

Selon d'autres modes de réalisation, les moyens d'étalonnage comprennent des moyens de gravure d'au moins deux repères sur la circonférence de la préforme à au moins deux hauteurs.

**Brève description des** figures : L'invention sera mieux comprise grâce à la description ci-dessous, qui se base sur des modes de réalisations possibles, expliqués de façon illustrative et nullement limitative, en référence avec les figures annexées, dans lesquelles :
[Fig.1] représente une vue générale de dessus d'une installation de production ;
[Fig.2] représente une vue latérale schématique d'un module de chauffe et d'un poste de soufflage ;
[Fig.3] représente une vue de face schématique d'un récipient et des capteurs d'épaisseur à différents niveaux de hauteur, définissant des sections ;
[Fig.4] représente une vue schématique de face des repères tracés manuellement sur une préforme et correspondants aux repères tracés sur un récipient ;
[Fig.5] représente un exemple illustratif de détermination des sections par marquage laser ;
[Fig.6] représente un exemple d'apposition de repères sur la préforme lors de l'étape d'étalonnage, où chaque repère est tracé à un même niveau de hauteur qu'un moyen de chauffe correspondant ;
[Fig.7] représente l'obtention de différents formats de récipients à partir de préformes, montrant notamment les repères propres à chaque format ;
[Fig.8] représente l'étape d'attribution des repères à différentes sections.

**Description détaillée de** l'invention : Dans la suite de la description, des éléments présentant une structure identique ou des fonctions analogues seront désignés par une même référence.

On a représenté schématiquement aux figures, des installations de production en série de récipients 1 en matériau thermoplastique à partir de préformes 2.

Dans la suite de la description, les préformes 2 et les récipients 1 se déplacent dans l'installation de production le long d'un trajet de circulation depuis l'amont vers l'aval. Les préformes 2 sont déplacées en file le long d'un trajet de chauffe par des moyens de convoyage qui seront détaillés par la suite.

De manière non limitative, les récipients 1 sont ici des bouteilles. Le matériau thermoplastique est par exemple ici formé par du polyéthylène téréphtalate, désigné par la suite sous son acronyme "PET".

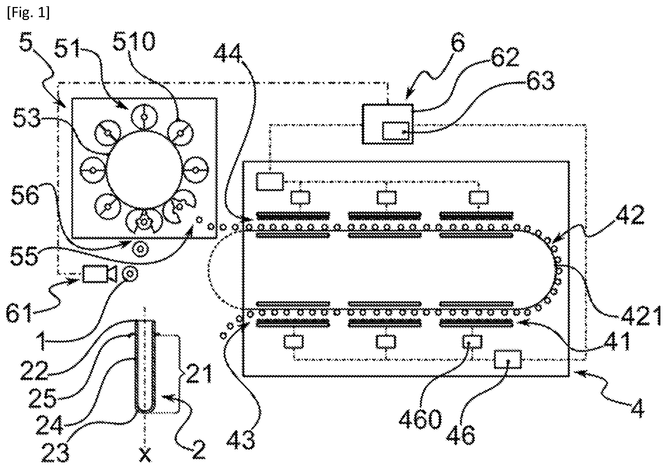

On a représenté à la figure 1 un exemple d'une telle préforme 2. La préforme 2 présente un axe "X" principal représenté verticalement à la figure 1. Elle présente un corps 21 cylindrique à paroi tubulaire fermé à l'une de ses extrémités axiales par un fond 23, et qui est ouvert à son autre extrémité par un col 22, lui aussi tubulaire. A sa base, le col 22 présente ici une collerette 25 servant à son transport dans l'installation de production.

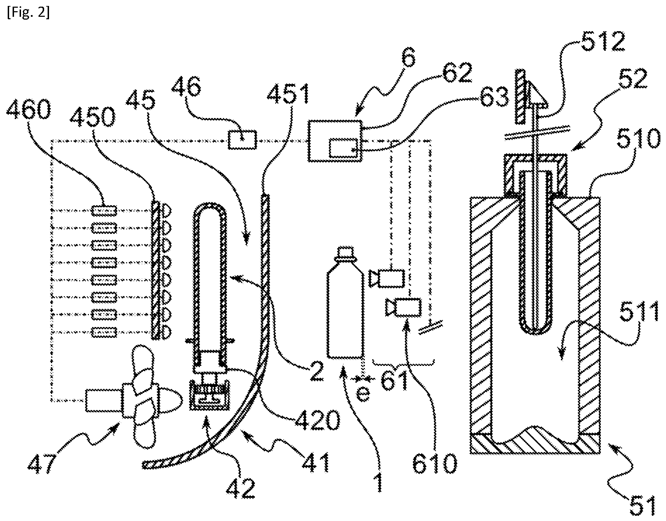

Comme représenté en détail à la figure 2, la paroi 24 est délimitée par une face externe et par une face interne. Le col 22 présente généralement sa forme définitive tandis que le corps de la préforme est destiné à subir une déformation relativement importante pour former le récipient 1 final lors d'une étape de formage.

Comme représenté à la figure 1, l'installation de fabrication comprend une unité de chauffe 4, une unité de formage 5 et une unité de contrôle 6 de l'installation de fabrication, qui comprend notamment un calculateur (ou processeur), une mémoire et une console (ou interface graphique), non représentée, pour l'interaction avec un opérateur.

L'unité de chauffe 4, aussi appelée unité de conditionnement thermique ou encore four, permet de chauffer une succession de préformes 2 à une température de référence. La température de référence est choisie pour que le corps 21 de chaque préforme 2 en sortie 44 d'unité de chauffe 4 soit dans un état malléable permettant une déformation du corps 21 de la préforme 2 afin de former le récipient 1 dans l'unité de formage 5. La température de référence pour le formage de la préforme est comprise entre la température de transition vitreuse et la température de cristallisation du matériau thermoplastique de la préforme 2. Dans le cas du PET, la température de référence est par exemple voisine de 110°. La valeur de la température de référence peut varier en fonction du produit avec lequel le récipient 1 va être rempli ou en fonction de la technique de remplissage dudit récipient. Ainsi, la température de référence est différente pour un remplissage à chaud ou pour un produit carbonaté par exemple. On notera que la température de référence correspond à la température à un endroit de référence de la préforme 2, c'est-à-dire en une zone localisée. En effet, la préforme 2 n'est pas nécessairement chauffée à une température uniforme mais peut présenter un profil de température le long de sa hauteur en fonction de la répartition de la matière que l'on souhaite au niveau du récipient 1, le long de sa hauteur.

On comprend alors qu'il est intéressant d'identifier précisément, pour un format 3 d'un récipient 1, quels sont les moyens de chauffe 410 qui agissent véritablement et précisément sur au moins une section 8 de ce récipient 1. L'étape d'étalonnage mise en œuvre par l'invention permet de satisfaire ce besoin.

Dans des modes de réalisation, l'unité de chauffe 4 comprend au moins un module de chauffe 41.

Selon un mode de réalisation, représenté à la figure 1, l'unité de chauffe 4 est un four à défilement, dans lequel les préformes 2 sont transportées pour être exposées à plusieurs modules de chauffe 41 successifs, répartis le long du trajet de chauffe. Ledit au moins un module de chauffe 41 comprend une pluralité de moyens de chauffe 410, aménagés sur des parois latérales 450.

Comme représenté en fig. 1, le module de chauffe 41 comprend également au moins une cavité de chauffe 45 qui comprend deux parois latérales 450 face à face et distantes l'une de l'autre et au moins l'une de ces parois étant celle qui supporte plusieurs moyens de chauffe 410 disposés les uns au-dessus des autres selon une hauteur de préforme 2 de sorte que toute la hauteur du corps 21 de chaque préforme 2 est exposée aux moyens de chauffe 410 sur le trajet de la préforme 2 dans ladite unité de chauffe 4.

Ainsi, il convient de noter qu'une préforme 2 n'est donc pas nécessairement exposée à une température homogène lors de son cycle de transformation vers un récipient 1, que cela soit le long de son trajet de déplacement dans l'installation ou que cela soit le long de sa hauteur. C'est la raison pour laquelle une étape d'étalonnage selon l'invention est particulièrement avantageuse.

Selon un mode de réalisation, tel que représenté à la figure 1, les moyens de chauffe 410 dans les modules de chauffe 41 sont répartis sur un côté seulement de ce trajet, auquel cas une paroi réfléchissante 451 est disposée de l'autre côté du trajet de chauffe pour réfléchir la chaleur vers les préformes 2.

Dans un autre mode de réalisation, non représenté, les moyens de chauffe 410 peuvent être répartis de part et d'autre du trajet de chauffe dans le module de chauffe 41.

Selon un mode de réalisation, les moyens de chauffe 410 sont disposés les uns au-dessus des autres et les uns à côté des autres en regard des préformes 2 définissant ainsi une matrice de moyens de chauffe 410 par rapport au trajet de chauffe des préformes 2.

Selon un autre mode de réalisation, les moyens de chauffe 410 forment une seule et même colonne dans le module de chauffe 41.

Selon certains modes de réalisation, les moyens de chauffe 410 sont agencés dans le module de chauffe 41 pour soumettre le corps 21 de la préforme 2 aux radiations définissant ainsi un profil de température approprié à travers la paroi de la préforme 2 de l'extérieur vers l'intérieur. Les zones de la préforme 2 avec une température plus basse conduisent à des parois plus épaisses du récipient 1 moulé, tandis que les zones plus chaudes de la préforme 2 sont plus étirées pendant l'opération de soufflage et conduisent ainsi à une paroi plus mince du récipient 1. Cet agencement des moyens de chauffe 410 aura donc un impact variable selon le format 3 de récipient 1 à obtenir. L'utilisation d'un échantillon de préforme 2 pour calibrer le procédé est donc particulièrement avantageuse pour mieux maîtriser le cycle de production et obtenir des récipients 1 entièrement conformes, c'est-à-dire de qualité satisfaisante.

Dans un mode de réalisation, les moyens de chauffe 410 sont agencés dans le module de chauffe 41 de sorte à ne pas soumettre le col 22 et la collerette 25 à la chaleur émise par lesdits moyens de chauffe. En effet, comme indiqué précédemment, seul le corps 21 de la préforme 2 est formé pour produire le récipient 1. Par conséquent, le col 22 et la collerette 25 ne doivent pas être déformés au cours de l'étape de formage et ne doivent donc pas être chauffés. Selon une caractéristique additionnelle, pour éviter le chauffage du col 22 et de la collerette 25, l'unité de chauffe 4 comprend un dispositif de ventilation positionné au droit des cols 22 et des collerettes 25 pour évacuer la chaleur susceptible d'être absorbée par lesdits cols et lesdites collerettes 25. Le dispositif de ventilation comprend par exemple au moins un ventilateur 47 piloté par l'unité de contrôle 6.

Dans des modes de réalisation, l'agencement des moyens de chauffe 410 est le même pour tous les modules de chauffe 41.

Selon un mode de réalisation, chaque moyen de chauffe 410 est formé par une lampe à incandescence émettant un rayonnement infrarouge.

Dans un autre mode de réalisation, chaque moyen de chauffe 410 est une diode laser émettant un rayonnement infrarouge.

Selon encore un autre mode de réalisation, chaque moyen de chauffe 410 est une lampe halogène.

Il est tout à fait possible de combiner plusieurs moyens de chauffe 410 différents.

En d'autres termes, chaque moyen de chauffe 410 est un chauffage de type radiant, émettant la chaleur par rayonnement, de type laser (par exemple des diodes laser). Chaque moyen de chauffe 410 émet dans l'infrarouge. Les moyens de chauffe 410 sont organisés par superposition et/ou juxtaposition pour former une ou plusieurs matrices au sein d'un module de chauffe 41.

Selon un mode de réalisation, chaque matrice est une matrice de diodes laser à cavité verticale émettant par la surface (VCSEL), chaque diode émettant par exemple un faisceau laser d'une puissance unitaire de l'ordre du Watt à une longueur d'onde d'environ 1 µm.

Pour permettre le déplacement des préformes 2 le long d'un trajet de chauffe, l'unité de chauffe 4 comprend un moyen de convoyage 42 desdites préformes 2 au travers de l'unité de chauffe 4 selon un trajet de chauffage s'étendant entre une entrée 43 et une sortie 44 de ladite unité.

Comme représenté aux Fig.1 et 2, le moyen de convoyage 42 comprend une succession de supports 420, chacun étant apte à supporter une préforme 2, montés sur une chaîne 421, se déplaçant le long du trajet de chauffe dans l'unité de chauffe 4.

Dans un mode de réalisation, non représenté, le moyen de convoyage 42 comprend par exemple une succession de supports 420, chacun étant apte à supporter une préforme 2, montés sur une navette de type moteur linéaire circulant sur une boucle fermée magnétique. Le mouvement de chacune de ces navettes est commandé indépendamment les unes des autres par l'unité de contrôle 6.

Selon un mode de réalisation, comme représenté sur la Fig.2, chaque support 420 est apte à recevoir une préforme 2 par emmanchement du col 22 sur ledit support. Chaque support 420 est par exemple mobile en rotation par rapport à la chaine 421 autour d'un axe de rotation confondu avec l'axe principal X d'une préforme 2 lorsque celle-ci est supportée par ledit support.

Selon un mode de réalisation, les moyens de chauffe 410 sont distribués de façon matricielle dans un module de chauffe 41, le long du trajet de chauffe et selon une direction transversale par rapport audit trajet, la direction transversale étant sensiblement parallèle à l'axe principal X des préformes 2 lorsqu'elles sont supportées par les supports 420.

En faisant tourner les préformes 2 autour de leur axe principal X, les supports 420 permettent d'exposer uniformément tout le corps 21 des préformes 2 aux moyens de chauffe 410.

L'unité de chauffe 4 comprend également une alimentation électrique 46 fournissant chaque moyen de chauffe 410 en puissance électrique. Chaque moyen de chauffe 410 convertit la puissance électrique qui lui est fournie en un rayonnement chauffant les préformes 2.

L'alimentation électrique 46 permet d'alimenter chacun des moyens de chauffe 410 individuellement de sorte qu'il est possible de les contrôler indépendamment. Cela permet de déterminer quels moyens de chauffe 410 sont utilisés et selon quel degré d'intensité le long du trajet pour chauffer les préformes 2 défilant dans l'unité de chauffe 4 au travers d'au moins un module de chauffe 41. La répartition des moyens de chauffe 410 alimentés ou non et selon quelle puissance le long du trajet et selon la direction transversale est généralement désignée par le terme « mapping » (cartographie) des moyens de chauffe 410.

La puissance électrique fournie aux moyens de chauffe 410 peut donc également être variable entre une puissance électrique maximale et une puissance électrique minimale efficace du moyen de chauffe 410. On entend par « puissance électrique maximale », la puissance électrique maximale à laquelle le moyen de chauffe peut être soumis sans être dégradé et on entend par « puissance électrique efficace minimale », la puissance électrique minimale à partir de laquelle le moyen de chauffe émet un rayonnement permettant de chauffer une préforme 2.

La puissance électrique s'exprime directement en puissance, c'est-à-dire, en watt ou en un pourcentage de la puissance électrique maximale d'un moyen de chauffe 410.

L'unité de formage 5 de récipients est formée par une roue de formage 53 déplaçant en rotation une pluralité de postes de formage 51 d'une entrée 55 à une sortie 56, à laquelle une succession de récipients 1 formés à partir des préformes 2 est extraite, comme représenté sur la Fig. 1. L'axe de rotation de la roue de formage 53 est par exemple sensiblement parallèle à l'axe principal X des préformes 2 lorsqu'elles sont transportées par la roue de formage.

Chaque poste de formage 51 comprend un moule 510 formant une cavité de moulage 511 présentant la forme du récipient 1 à former et agencé pour recevoir une préforme 2 de façon que le corps 21 de la préforme 2 s'étende dans la cavité de moulage 511, comme représenté sur la Fig. 2. Chaque moule 510 est formé de plusieurs parties mobiles entre une position ouverte, dans laquelle le moule peut recevoir une préforme 2 et libérer un récipient 1, respectivement à l'entrée 55 et à la sortie 56, et une position fermée, dans laquelle la cavité de moulage 511 est fermée sur la préforme 2 entre l'entrée 55 et la sortie 56. Lorsqu'une préforme 2 est reçue dans le moule 510, le corps 21 s'étend dans la cavité de moulage 511 et le col 22 de la préforme s'étend en saillie du moule 510 en dehors de la cavité de moulage 511, comme représenté sur la Fig. 2.

Chaque unité de formage 5 comprend en outre au moins un dispositif d'injection 52 agencé pour injecter un fluide dans le volume interne de la préforme 2 placée dans le moule 510 du poste de formage 51 de sorte que le fluide déforme la préforme 2 et que celle-ci acquière la forme de la cavité de moulage 511, c'est-à-dire que la préforme 2 soit formée en récipient 1 sous l'action du fluide. Selon un mode de réalisation, le fluide est par exemple un gaz pressurisé, par exemple de l'air sous pression. Dans ce cas, le dispositif d'injection 52 est formé par une tuyère et comprend une ou plusieurs vannes permettant de contrôler l'injection du fluide dans la préforme 2. La pression à laquelle le fluide est injecté est réglable. A titre d'exemple et de manière connue, non illustrée ici, l'unité de formage 5 comprend un réservoir d'air sous pression à une première pression et un autre réservoir d'air sous pression à une deuxième pression, les vannes permettant d'injecter sélectivement l'air à la première pression ou à la deuxième pression.

Selon un mode de réalisation, représenté sur la Fig. 2, chaque poste de formage 51 comprend en outre une tige d'étirage 512 mobile par rapport au moule 510 selon une direction confondue avec l'axe principal X de la préforme 2 lorsqu'elle est placée dans ledit moule. La tige d'étirage 512 est agencée pour exercer un appui sur le fond 23 de la préforme 2 afin d'étendre celle-ci selon la direction axiale. Plus particulièrement, la tige d'étirage 512 étend la préforme 2 jusqu'à ce que le fond 23 de la préforme 2 entre en contact avec le fond de la cavité de moulage 511. Le déplacement de la tige d'étirage est commandé par un actionneur soit mécanique de type vérin commandé par un système de came et de galet ou soit par un actionneur électrique de type moteur linéaire.

L'unité de formage 5 est pilotée de manière automatique par une unité de contrôle 6.

Comme représenté aux fig.1 et 2, l'installation de fabrication comprend une unité de contrôle 6 reliée à l'alimentation électrique 46.

L'unité de contrôle 6 pilote l'alimentation électrique 46 de l'unité de chauffe 4 par l'intermédiaire de variateurs de puissance 460.

Les variateurs de puissance 460 permettent de faire varier la puissance électrique des moyens de chauffe 410, en entrée du module de chauffe 41, entre la puissance électrique maximale et la puissance électrique minimale efficace. Ces variateurs peuvent être de type analogique ou de type électronique.

L'unité de contrôle 6 régule avantageusement le ou les alimentations électriques et/ou le ou les variateurs 460 de chaque moyen de chauffe 410.

Comme représenté à la Fig. 1 et à la Fig. 2, l'unité de contrôle 6 comprend une mémoire 63 dans laquelle sont enregistrées au moins une consigne de puissance électrique pour au moins une ligne de moyens de chauffe et/ou au moins une colonne de moyens de chauffe 410 et au moins une consigne d'épaisseur à au moins un niveau de hauteur 9 du récipient 1.

Selon un mode de réalisation, les consignes sont enregistrées dans la mémoire 63 de l'unité de contrôle 6 par un opérateur.

Les consignes sont, par exemple, déterminées de manière empirique sur la base d'essai ou à partir de bases de données de précédentes préformes 2 chauffées en vue d'obtenir un récipient 1.

L'unité de contrôle 6 met en œuvre au moins une mesure d'épaisseur d'une paroi du récipient à au moins un niveau de hauteur 9 au travers des moyens de détection 61.

Selon l'invention, les moyens de détection 61 comprennent au moins deux capteurs 610.

Comme illustré sur la figure 1, les moyens de détection 61 de mesure d'épaisseur sont placés en sortie 56 de l'unité de formage 5 pour mesurer en un point, à un niveau de hauteur 9 prédéterminé, l'épaisseur du récipient 1 qui vient d'être formé. Dans un mode de réalisation, les moyens de détection 61 comprennent au moins deux capteurs 610 de type optique.

De façon alternative, dans un mode de réalisation non représenté, les moyens de détection 61 de mesure d'épaisseur sont placés dans le moule. Dans ce cas, les moyens de détection 61 peuvent être des capteurs de type capacitif.

Pour pouvoir juger de la conformité du récipient 1 formé sur l'ensemble de sa hauteur, il est avantageux de positionner plusieurs capteurs 610, les uns au-dessus des autres, le long de la hauteur 9 du récipient 1. La hauteur 9 d'un récipient s'étend dans la direction parallèle à l'axe de symétrie dudit récipient 9.

Dans des modes de réalisation, les moyens de détection 61 de l'unité de contrôle 6 comprennent au moins deux capteurs 610 de mesure de l'épaisseur, le long de la hauteur du récipient 1.

Dans des modes de réalisation, pour chaque récipient 1, l'unité de contrôle 6 compare la mesure d'épaisseur obtenue par l'intermédiaire d'au moins deux capteurs 610 à la consigne d'épaisseur enregistrée correspondante pour ce niveau de hauteur :
- si la mesure d'épaisseur et la consigne d'épaisseur sont identiques alors l'unité de contrôle 6 ne modifie pas les puissances électriques alimentant les moyens de chauffe 410.
- si la mesure d'épaisseur est différente de la consigne d'épaisseur alors l'unité de contrôle 6 modifie la puissance électrique d'au moins un moyen de chauffe 410.

Selon une caractéristique optionnelle, si l'unité de contrôle 6 constate un défaut d'épaisseur à au moins un niveau de hauteur 9, alors elle modifie les puissances électriques d'au moins deux moyens de chauffe 410. Préférentiellement, la somme des puissances électriques alimentant tous les moyens de chauffe 410 reste identique tout le long du procédé de fabrication des récipients 1 pour chaque module de chauffe 41, préférentiellement pour l'unité de chauffe 4. En d'autres termes, selon un mode de réalisation, une augmentation ou une baisse de la puissance électrique d'un moyen de chauffe 410 va entraîner une baisse ou une augmentation d'au moins un autre moyen de chauffe 410, afin que la somme des puissances électriques reste la même au moins pour un module de chauffe 41 : la puissance électrique globale liée aux moyens de chauffe 410 reste globalement constante.

Afin de pouvoir optimiser le paramétrage de la puissance électrique des moyens de chauffe 410, l'invention propose donc d'établir la relation entre la position d'un moyen de chauffe 410 et son impact ciblé au niveau d'au moins une section 8 d'un récipient 1 obtenu.

Il est entendu que, dans certains modes de réalisation, la hauteur d'un capteur 610 peut être sensiblement différente de la hauteur à laquelle l'épaisseur de la paroi est mesurée par lui. En effet, dans certains modes de réalisation, la forme de la préforme 2 et/ou du récipient 1 nécessite de positionner le capteur à une hauteur sensiblement différente pour que ladite mesure soit optimale.

Selon un mode de réalisation, la limite inférieure 810 ou la limite supérieure 820 d'une section 8 correspond à la hauteur 9' à laquelle l'épaisseur est mesurée par un capteur 610.

Dans un mode de réalisation préféré, la hauteur 9 à laquelle l'épaisseur est mesurée par un capteur 610 correspond à la hauteur 9 à laquelle ledit capteur 610 est positionné.

Selon des modes de réalisation, les moyens de détection 61 de l'unité de contrôle 6 comprennent au moins deux capteurs 610 et le récipient 1 au moins trois sections 8, chaque section ayant une limite inférieure 810 et une limite supérieure 820, chaque limite inférieure 810 et/ou chaque limite supérieure 820 d'au moins une section 8 correspondant à une hauteur 9 d'un capteur 610.

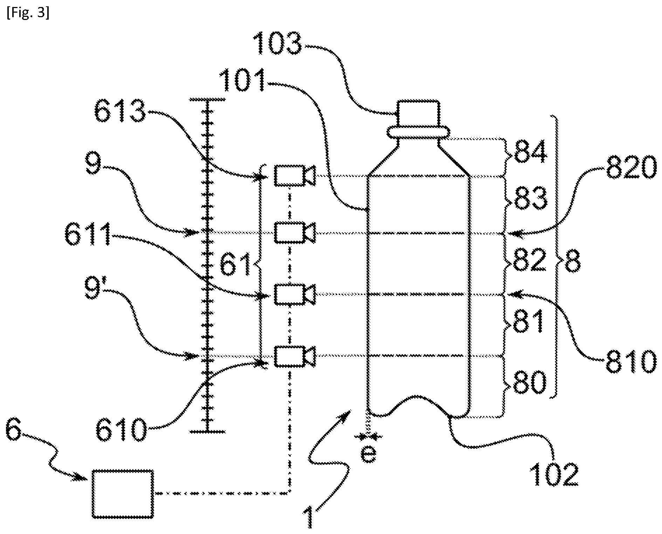

Comme sur le mode de réalisation illustré en figure 3, le récipient 1 comprend par exemple cinq sections 80, 81, 82, 83 et 84. La section 80 se situant au plus petit niveau de hauteur en partant du fond 102 du récipient 1 a pour limite inférieure le fond 102 dudit récipient 1 et comme limite supérieure la hauteur correspondant au premier capteur 610 d'épaisseur. La section 84 se situant au plus grand niveau de hauteur en partant du fond 102 du récipient 1 a pour limite inférieure 810 la hauteur correspondant au dernier capteur 613 d'épaisseur et pour limite supérieure 820 le col 103 dudit récipient 1. Les autres sections 81, 82 et 83 intermédiaires ont des limites inférieures 810 et des limites supérieures 820 correspondant à différents niveaux de hauteur des capteurs, comme représenté sur la figure 3. Notamment, dans le mode de réalisation illustré, la limite inférieure 810 de la section 82 correspond à la limite supérieure 820 de la section 81.

Dans le mode de réalisation représenté à la figure 3, l'unité de contrôle 6 comprend quatre capteurs 610 et le récipient 1 comprend cinq sections 8 le long de sa hauteur. Chaque capteur 610 se situe à un niveau de hauteur 9 différent.

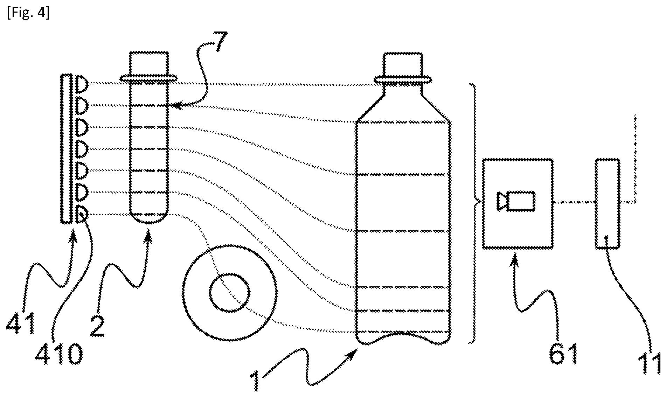

Dans un mode de réalisation, comme illustré en figure 4, l'installation de fabrication comprend encore des moyens d'étalonnage 10, lesdits moyens d'étalonnage venant apposer au moins deux repères 7 le long de la hauteur de l'échantillon de préforme 2. Chacun des deux repères 7 est associé à au moins un moyen de chauffe 410.

Selon des modes de réalisation, les moyens d'étalonnage 10 sont situés en amont de l'unité de chauffe 4 dans l'installation de fabrication.

Dans des modes de réalisation, les au moins deux repères 7 sont apposés sur une seule partie de la paroi de l'échantillon de préforme 2, à au moins deux hauteurs dudit échantillon. Selon une autre variante, les au moins deux repères 7 sont apposés sur la paroi de l'échantillon de préforme, sur l'ensemble de la circonférence dudit échantillon.

Les au moins deux repères 7 sont apposés à au moins deux hauteurs prédéterminées. Le niveau de hauteur est prédéterminé par la position du moyen de chauffe 410 dans le module de chauffe 41.

Les au moins deux repères sont apposés à au moins deux hauteurs différentes, dont la position respective est déterminée par la position du ou des moyens de chauffe auquel ils sont associés. La position, c'est-à-dire la hauteur d'un repère 7 est donc déterminée par la hauteur d'au moins un moyen de chauffe 410.

Dans des modes de réalisation, les moyens d'étalonnage 10 sont des moyens d'impression par jet d'encre d'au moins deux repères 7 sur la circonférence de l'échantillon de préforme 2, chacun des au moins deux repères 7 étant associé à au moins un moyen de chauffe 410.

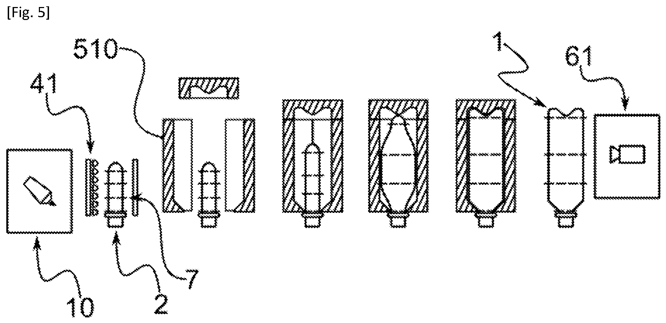

Selon une autre variante, illustrée en figure 5, les moyens d'étalonnage 10 sont des moyens de marquage laser. Dans cet exemple, quatre repères sont apposés au niveau de la paroi 24 de l'échantillon de préforme 2.

Dans un autre mode de réalisation, les moyens d'étalonnage 10 sont des moyens de gravure.

Selon l'invention, tout moyen permettant d'apposer un repère 7 au niveau de la paroi de l'échantillon de préforme 2 peut être un moyen d'étalonnage 10. Notamment, selon encore une autre variante, un opérateur peut apposer manuellement les au moins deux repères 7.

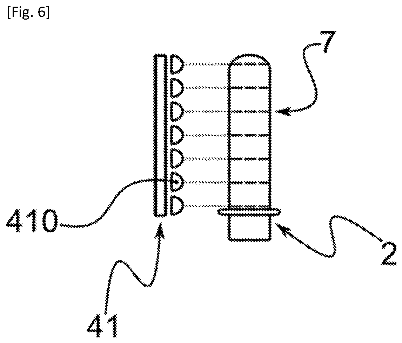

Préférentiellement, selon un mode de réalisation illustré en figure 6, chaque repère 7 est apposé sur la paroi de l'échantillon de préforme 2, au niveau de la hauteur à laquelle se situe un moyen de chauffe 410. En d'autres termes, le repère 7 et le moyen de chauffe 410 sont en vis-à-vis. Dans un mode de réalisation, la hauteur du moyen de chauffe 410 correspond au point où la source de chaleur est maximale, c'est-à-dire au point où la chaleur est la plus concentrée, où la source de chaleur se situe.

Chacun des repères 7 est alors associé à un moyen de chauffe 410 et est apposé sur la paroi de l'échantillon de préforme 2 à la hauteur à laquelle le moyen de chauffe 410 est situé dans le module de chauffe 41. Selon une variante, un premier repère 7 est tracé, correspondant par exemple au premier moyen de chauffe 410, c'est-à-dire correspond au moyen de chauffe 410 situé à la plus petite hauteur. Le moyen de chauffe 410 le plus bas, c'est-à-dire le premier, est associé au premier repère 7. Le deuxième moyen de chauffe 410 est alors associé à un deuxième repère 7, et ainsi de suite. Chaque repère 7 peut également être tracé en fonction de l'écart qui sépare chaque moyen de chauffe 410 dans le module de chauffe 41, dans le sens de la hauteur. Chaque moyen de chauffe 410 a alors un repère 7 situé en vis-à-vis.

Dans d'autres modes de réalisation, non représentés ici, chaque repère 7 est apposé à un niveau de hauteur correspondant à un point situé entre deux moyens de chauffe 410. En d'autres termes, les au moins deux repères 7 sont tracés sur la paroi de l'échantillon de préforme 2, selon une règle préalablement définie établissant le rapport entre le niveau de hauteur d'un moyen de chauffe 410 dans le module de chauffe 41, sur au moins une paroi latérale 45°et le niveau de hauteur du repère 7 tracé sur la paroi de la préforme 2. Ce rapport est égal à un selon un mode de réalisation préféré.

Dans le cadre de l'invention, le repère 7 peut consister en un trait, un point, ou tout autre moyen permettant de marquer la préforme 2 de manière visuelle et facilement repérable. Le trait peut faire le tour complet de la préforme 2, de manière continue ou non, par exemple en pointillés. Le trait peut également être partiel. Le repère 7 peut tout aussi bien être un point, une croix, etc.

Dans un mode de réalisation préféré, tel que représenté en figure 6, chaque repère 7 correspond à un seul moyen de chauffe 410. Un repère 7 est donc associé à un seul moyen de chauffe 410, et, réciproquement, chaque moyen de chauffe 410 est associé à un seul repère 7. En d'autres termes, il y a autant de repères 7 que de moyens de chauffe 410. Après l'étape d'apposition des repères 7 sur l'échantillon de préforme 2, et après les étapes de conditionnement thermique et de soufflage dudit échantillon, la position de chacun des repères 7 est relevée sur le récipient 1 obtenu. En fonction de la position d'un repère 7, c'est-à-dire de son niveau de hauteur 9, on attribue le moyen de chauffe 410 associé audit repère à au moins une section 8. On entend par « attribuer » un moyen de chauffe 410 à au moins une section 8 le fait d'assigner un moyen de chauffe à au moins une section 8. Cela est particulièrement avantageux car on peut alors identifier aisément le périmètre d'action de chaque moyen de chauffe 410 sur la préforme 2 puis sur le récipient 1, et ainsi de déterminer quels sont les moyens de chauffe 410 impliqués dans le conditionnement thermique de la préforme, notamment au niveau de hauteur où un défaut est identifié.

Ainsi, l'étape d'apposition des repères 7 permet d'associer au moins un moyen de chauffe 410 à au moins un repère 7, selon une règle prédéterminée. C'est la position du moyen de chauffe 410 au sein du module de chauffe 41, c'est-à-dire sa hauteur, ou encore sa position relative par rapport aux autres moyens de chauffe 410 dudit module 41 qui va déterminer à quel repère 7 il sera associé. Le repère 7 n'est pas nécessairement apposé en vis-à-vis du moyen de chauffe 410 auquel il est associé, mais l'ordre des repères 7 sur l'échantillon de préforme doit correspondre à l'ordre de la position des moyens de chauffe 410 dans le module de chauffe 41.

Puis, l'on va donc relever la position de chaque repère 7, et en fonction de leur hauteur sur le récipient 1 obtenu, il est alors aisé de déterminer quels sont les moyens de chauffe 410 qui ont impacté le conditionnement thermique d'une section 8 du récipient 1. Notamment, le premier moyen de chauffe 410 dans le module de chauffe 41, associé au premier repère, sera attribué à la première section du récipient 1 en partant de son fond 102. Lors du relevé, on détermine pour chaque repère 7 dans quelle section 8 il se trouve. Puis, puisqu'il est associé à au moins un moyen de chauffe 410, on attribue ledit au moins un moyen de chauffe 410 à la section 8 correspondante.

Selon d'autres modes de réalisation, l'installation de fabrication comprend encore des moyens d'attribution 11. En fonction de la position des repères 7 sur le récipient 1 obtenu, pour au moins un format 3 donné, les moyens d'attribution 11 vont allouer les moyens de chauffe 410 à au moins une des sections 8 préalablement déterminées. En d'autres termes, chaque moyen de chauffe 410 est d'abord associé à un repère 7, pour être ensuite attribué à une section 8. Ainsi, chaque moyen de chauffe 410 sera attribué à au moins une section 8.

Selon des modes de réalisation, un moyen de chauffe 410 est attribué à deux sections 8. Cela peut notamment être le cas lorsque ledit moyen de chauffe 410 se situe à la même hauteur que la limite inférieure 810 ou à la même hauteur que la limite supérieure 820 d'une section 8.

Selon d'autres modes de réalisation, dans le cas où le moyen de chauffe 410 se situe à la même hauteur que la limite inférieure 810 ou à la même hauteur que la limite supérieure 820 d'une section 8, il est attribué à la section se situant en-dessous de cette limite.

Selon un autre mode de réalisation préféré, dans le cas où le repère 7 associé à un moyen de chauffe 410 se situe à la même hauteur que la limite inférieure 810 ou à la même hauteur que la limite supérieure 820 d'une section 8, le moyen de chauffe 7 associé est attribué à la section se situant au-dessus de cette limite. L'étape d'attribution se fait par la localisation, par exemple visuelle, des repères 7. En fonction de la position d'un repère 7, le moyen de chauffe 410 est attribué à au moins une section 8.

Selon un mode de réalisation préféré, un moyen de chauffe 410 est attribué à une des sections 8 en fonction de la position du repère 7 auquel il est associé. En d'autres termes, un moyen de chauffe 410 est alors attribué à une seule section 8. Dans certains modes de réalisation, au moins un moyen de chauffe 410 n'est attribué à aucune des sections 8.

Dans un mode de réalisation préféré, au moins un moyen de chauffe 410 est attribué à une section 8.

Dans des modes de réalisation, chacune des sections 8 peut se voir attribuer zéro, un ou plusieurs moyens de chauffe 410. Selon une autre caractéristique possible, au plus cinq moyens de chauffe 410 sont attribués à chaque section 8, préférentiellement au plus trois moyens de chauffe 410.

Dans des modes de réalisation, lorsque les moyens de chauffe 410 sont des diodes laser, chaque section 8 comporte au plus vingt moyens de chauffe 410, préférentiellement au plus sept moyens de chauffe 410.

Les moyens d'attribution 11 comprennent des moyens de mesure permettant de mesurer la hauteur des repères 7 sur le récipient formé afin de relever leur position respective.

Ces moyens sont par exemple des moyens de vision.

Les moyens d'attribution 11 comprennent également des moyens de calcul pour traiter l'information provenant des moyens de mesure. Les moyens de vision vont relever la position des repères 7 sur le récipient 1 obtenu puis les moyens de calcul vont traiter l'information et attribuer chaque moyen de chauffe 410 associé à un repère 7 à au moins une section 8.

Selon une caractéristique additionnelle, l'information provenant des moyens de mesure peut être traitée par l'unité de contrôle 6.

Dans un autre mode de réalisation, les au moins deux capteurs 610 peuvent également former les moyens d'attribution 11. Cela est notamment possible lorsque les au moins deux capteurs 610 comprennent une caméra de vision. Dans ce mode de réalisation, les moyens de mesure des moyens d'attribution 11 sont formés par les au moins deux capteurs 610. Dans ce mode de réalisation, l'unité de contrôle 6 comprend les moyens d'attribution 11 et les moyens de détection 61.

Selon un mode de réalisation préféré, le récipient 1 comprend quatre capteurs 610, cinq sections 8, et le même nombre de repères 7 que le nombre de moyens de chauffe 410.

L'invention concerne encore un procédé de fabrication de récipients 1 à partir de préformes 2, ledit procédé utilisant l'installation de fabrication décrite ci-dessus.

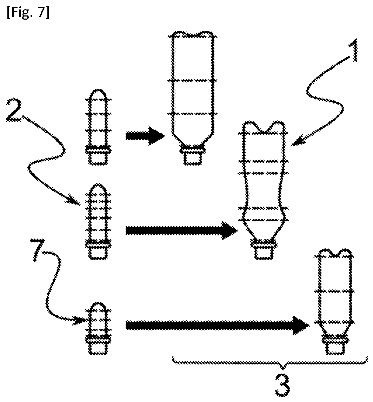

Selon l'invention, le procédé est mis en œuvre pour au moins un format 3 de récipients 1. En effet, comme illustré en Fig.7, les repères 7 tracés sur un échantillon de préforme 2 se situeront à différentes hauteurs sur le récipient 1, en fonction de son format 3. De même, pour un même échantillon de préforme 2, la répartition des repères 7 sur le récipient 1 peut varier en fonction du format 3 final désiré, notamment en regard du conditionnement thermique de ladite préforme 2. Le format d'un récipient 1 varie notamment en fonction du contour extérieur dudit récipient, de son volume, de sa hauteur. Pour des formats 3 proches, ayant des caractéristiques similaires, il n'est pas toujours nécessaire de réaliser une nouvelle étape d'étalonnage à partir d'un échantillon. En d'autres termes, selon un mode de réalisation, il est possible de mettre en œuvre l'étape d'étalonnage une seule fois pour différents formats 3 de récipients, dans le cas où lesdits formats 3 ont des caractéristiques communes. Par exemple, cela peut être le cas pour des formats 3 de récipients de même hauteur, de même volume, avec un contour extérieur légèrement différent.

Selon un mode de réalisation préféré, l'étape d'étalonnage est mise en œuvre à chaque changement de format 3 de récipient 1.

Dans des modes de réalisation, le procédé de fabrication de récipients 1 à partir de préformes 2, est mis en œuvre pour des récipients 1 pouvant présenter différents formats 3, chaque format 3 de récipients 1 présentant au moins trois sections (8) le long de la hauteur (9) du récipient (1) et comprend au moins les étapes suivantes de :
- conditionnement thermique d'une préforme 2 en un matériau thermoplastique, ledit conditionnement thermique étant réalisé par au moins une unité de chauffe 4 comprenant au moins un module de chauffe 41, ledit module de chauffe 41 comprenant plusieurs moyens de chauffe 410 positionnés les uns au-dessus des autres ;
- moulage par soufflage ou soufflage-étirage du récipient 1 au moyen d'une unité de formage 5 de récipients 1.

Le procédé est caractérisé en qu'il comprend une étape d'étalonnage pour au moins un des formats (3) de récipient (1) comprenant la succession d'actions suivantes :
- fourniture d'un échantillon de préforme 2 pour un format 3 ;
- apposition sur ledit échantillon de au moins deux repères 7 répartis le long de la hauteur dudit échantillon, chacun des au moins deux repères 7 étant associé à au moins un moyen de chauffe 410 ;
- relevé de la position des repères 7 sur ledit récipient 1 obtenu ;
- attribution de chacun des moyens de chauffe 410 à au moins une des trois sections 8, en fonction de la position des repères 7 sur ledit récipient 1 obtenu.

L'apposition des au moins deux repères 7 le long de la hauteur de l'échantillon de préforme 2 se fait à l'aide de moyens d'étalonnage 10. Les au moins deux repères 7 correspondent par exemple à un groupe de moyens de chauffe 410.

Selon une variante, on appose un repère 7 pour chaque moyen de chauffe 410, de préférence au même niveau de hauteur.

Selon un autre mode de réalisation, on appose un repère 7 pour chaque moyen de chauffe 410, mais à un niveau de hauteur différent. Dans ce mode de réalisation, la différence entre la hauteur d'un repère 7 et la hauteur d'un moyen de chauffe 410 correspondant doit être la même pour chaque repère 7 apposé. En d'autres termes, si pour un moyen de chauffe 410, le repère 7 est apposé à deux centimètres en dessous de la hauteur dudit moyen de chauffe 410, chaque repère 7 de chaque moyen de chauffe 410 sera également apposé à une distance de deux centimètres en dessous de la hauteur dudit moyen de chauffe 410.

L'apposition des au moins deux repères 7 le long de la hauteur de l'échantillon de préforme 2 se fait donc à au moins deux hauteurs prédéterminées.

Le procédé comprend également, dans un mode de réalisation, une étape de définition, pour chaque format 3 de récipients 1, d'au moins trois sections 8 le long de la hauteur dudit récipient, chaque section 8 ayant une limite inférieure 810 et une limite supérieure 820, chaque limite inférieure 810 et/ou chaque limite supérieure 820 d'au moins une section 8 correspondant à une hauteur 9 d'un capteur 610. Pour la section 8 se situant à la plus petite hauteur du récipient, en partant du fond dudit récipient, la limite inférieure 810 correspond au fond du récipient 1. Pour la section 8 se situant à la plus grande hauteur du récipient, en partant du fond, la limite supérieure 820 correspond au col dudit récipient 1.

Puis, après le conditionnement thermique de la préforme 2, et après l'étape de soufflage de ladite préforme pour obtenir un récipient 1, le procédé comprend également une étape d'attribution des moyens de chauffe 410 à une des sections définies préalablement. Cette étape d'attribution comprend une étape de relevé de la position des repères 7 sur ledit récipient 1 formé. Ladite mesure est suivie d'une étape d'attribution de chacun des moyens de chauffe 410 à au moins une des sections 8., en fonction de la position, c'est-à-dire de la hauteur mesurée, des repères 7 sur le récipient 1. Il est envisageable qu'une section 8 ne soit pas rattachée à un des moyens de chauffe 410, c'est-à-dire qu'aucun moyen de chauffe 410 ne soit attribué à une section 8 considérée.

Dans un mode de réalisation préféré, au moins un moyen de chauffe 410 est attribué à chaque section 8.

Selon un autre mode de réalisation, le relevé de la position des repères 7 sur le récipient 1 obtenu est réalisé par tout moyen de vision. L'attribution des moyens de chauffe 410 à une section 8 peut être réalisée par l'unité de contrôle 6 ou par des moyens de calcul.

Dans des modes de réalisation, l'attribution des moyens de chauffe 410 est réalisée par un opérateur.

Ainsi, selon l'invention, il est possible de connaître précisément quels moyens de chauffe 410 chauffent la préforme 2 à un niveau de hauteur donné pour produire un récipient 1 correspondant. En d'autres termes, au moyen de l'étape d'étalonnage, on sait quels sont les moyens de chauffe 410 qui agissent sur au moins une section 8 d'un récipient 1 au cours de son procédé de fabrication. En cas de détection d'un défaut d'épaisseur au niveau de la paroi du récipient 1, il sera possible de corriger le conditionnement thermique de manière contrôlée et précise.

Selon une variante, l'étape d'étalonnage comprend une étape de définition de cinq sections 8 pour un format 3 de récipients 1.

Selon certains modes de réalisation, l'étape d'apposition de repères 7 sur l'échantillon de préforme 2 est réalisée par un marquage laser sur la circonférence de ladite préforme, à au moins deux hauteurs.

Dans d'autres modes de réalisation, l'étape d'apposition de repères 7 sur la préforme 2 est réalisée par impression par jet d'encre sur la circonférence dudit échantillon, à au moins deux hauteurs.

Selon une variante, l'étape d'apposition de repères 7 peut être réalisée manuellement, par un opérateur.

Le marquage des repères peut prendre la forme d'un trait, d'un point, ou de tout autre motif.

Enfin, selon une caractéristique additionnelle possible, chaque repère 7 apposé sur la préforme 2 est réalisé à la même hauteur que la hauteur séparant deux moyens de chauffe 410. Selon ce mode de réalisation, l'étape d'apposition de repères 7 correspond à l'apposition d'un repère 7 pour chaque moyen de chauffe 410. Chaque moyen de chauffe 410 est alors associé à un seul repère 7. De façon alternative, il est aussi possible d'associer un groupe de moyens de chauffe 410 à un repère 7.

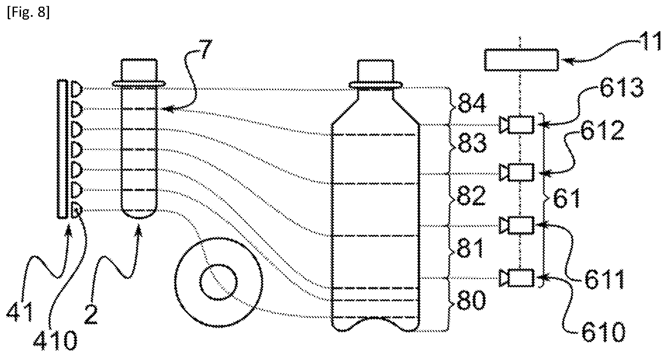

La figure 8 montre un exemple illustratif où chaque repère 7 est apposé sur la paroi 24 de la préforme 2 en vis-à-vis d'un moyen de chauffe 410. Puis, sur cette même figure, on retrouve les repères 7 sur le récipient 1 formé. Les sections 8 ont été préalablement définies et sont au nombre de cinq. Dans ce mode de réalisation, on voit que deux moyens de chauffe 410 seront attribués à la section 84. Deux moyens de chauffe 410 seront également attribués à la section 80. Les sections 81, 81 et 82 se verront attribuer respectivement un seul moyen de chauffe 410. Dans ce mode de réalisation, les moyens d'attribution 11 et les moyens de détection 61 formés par les capteurs 610 d'épaisseur forment un seul et même moyen. En d'autres termes, un même moyen, par exemple une caméra de vision, joue le rôle de moyens de détection 61 et de moyen de relevé des repères 7. L'unité de contrôle 6 va mettre en œuvre des moyens de calcul pour attribuer les moyens de chauffe 410 à chacune des sections 8, en fonction de la position relevée des repères 7.

Dans certains modes de réalisation, l'étape de contrôle mise en œuvre par le procédé de fabrication consiste en la comparaison de la mesure de l'épaisseur mesurée à un niveau de hauteur 9 du récipient 1 par les moyens de détection 61 à une valeur de consigne, pour le même niveau de hauteur. Cette étape permet de détecter un défaut d'épaisseur potentiel à au moins un niveau de hauteur du récipient 1.

Selon une caractéristique additionnelle, le procédé comprend une étape supplémentaire consistant à la correction de la puissance de chauffe des moyens de chauffe 410, pour corriger le défaut d'épaisseur constaté à au moins un niveau de hauteur 9. Le fait d'avoir des moyens de chauffe 410 attribués spécifiquement à des sections 8 du récipient 1 permet de corriger le défaut de manière plus précise, et de réguler le conditionnement thermique de manière localisée. En d'autres termes, on ne va corriger la puissance électrique d'un moyen de chauffe 410 que s'il est attribué à la section 8 pour laquelle un défaut a été détecté.

Lors de cette étape de contrôle :
- si la mesure d'épaisseur et la consigne d'épaisseur sont identiques alors l'unité de contrôle 6 ne modifie pas les puissances électriques alimentant les moyens de chauffe 410.
- si la mesure d'épaisseur est différente de la consigne d'épaisseur pour une section 8 donnée, alors l'unité de contrôle 6 modifie la puissance électrique d'au moins un moyen de chauffe 410 attribué à ladite section 8.

Selon une caractéristique additionnelle, si l'unité de contrôle 6 constate un défaut d'épaisseur à au moins un niveau de hauteur 9, alors elle modifie les puissances électriques d'au moins deux moyens de chauffe 410. Préférentiellement, la somme des puissances électriques alimentant tous les moyens de chauffe 410 reste identique tout le long du procédé de fabrication des récipients 1 pour un module de chauffe 41, de préférence pour l'unité de chauffe 4. Cela est possible du fait de l'attribution spécifique d'au moins un moyen de chauffe 410 à une section déterminée 8 du récipient 1.

L'invention permet avantageusement de réguler le conditionnement thermique d'une préforme 2 lors d'un procédé de fabrication récipients 1 en matière thermoplastique. Cela a pour effet d'optimiser le procédé de production et de corriger les défauts liés à un mauvais paramétrage de l'unité de chauffe de manière rapide et précise.

## Revendications

1. Procédé de fabrication de récipients (1) à partir de préformes (2), lesdits récipients (1) pouvant présenter différents formats (3), chaque format (3) de récipient (1) présentant au moins trois sections (8) le long de la hauteur (9) du récipient (1), procédé comprenant au moins les étapes suivantes de :
- conditionnement thermique d'une préforme (2) en un matériau thermoplastique, ledit conditionnement thermique étant réalisé par au moins une unité de chauffe (4) comprenant au moins un module de chauffe (41), ledit module de chauffe (41) comprenant plusieurs moyens de chauffe (410) positionnés les uns au-dessus des autres ;
- moulage par soufflage ou étirage-soufflage du récipient (1) au moyen d'une unité de formage (5) de récipients (1) ;
ledit procédé est **caractérisé en ce qu'**il comprend une étape d'étalonnage pour au moins un des formats (3) de récipient (1) comprenant la succession d'actions suivantes :
- fourniture d'un échantillon de préforme (2) pour ledit format (3) ;
- apposition sur ledit échantillon de au moins deux repères (7) répartis le long de la hauteur dudit échantillon, chacun des au moins deux repères (7) étant associé à au moins un moyen de chauffe (410) ;
- conditionnement thermique dudit échantillon et soufflage dudit échantillon pour obtenir un récipient (1) selon ledit format (3),
- relevé de la position des repères (7) sur ledit récipient (1) obtenu ;
- attribution de chacun des moyens de chauffe (410) à au moins une des trois sections (8), en fonction de la position des repères (7) sur ledit récipient (1) obtenu.

2. Procédé selon la revendication 1, **caractérisé en ce qu'**il comprend une étape de contrôle de l'épaisseur de la paroi (101) des récipients (1) au niveau des sections (8), ledit contrôle étant réalisé au moyen d'une unité de contrôle (6), ladite unité comprenant des moyens de détection (61) comprenant au moins deux capteurs (610) et l'étape de contrôle comprenant la comparaison de ladite mesure d'épaisseur à une valeur de consigne.

3. Procédé selon la revendication 2 où, pour au moins une section (8), l'épaisseur est mesurée par le capteur (610) qui lui correspond, au niveau de la limite inférieure (810) et/ou de la limite supérieure (820) de ladite section (8).

4. Procédé selon la revendication 2 ou 3, **caractérisé en ce qu'**il comprend une étape automatique de réglage de la puissance d'au moins un moyen de chauffe (410) en fonction de l'épaisseur mesurée pour la section (8) à laquelle ledit moyen est attribué.

5. Procédé de fabrication de récipients (1) selon l'une quelconque des revendications 1 à 4, **caractérisé en ce que** l'étape d'apposition de repères (7) sur l'échantillon consiste à procéder à un marquage laser sur la circonférence dudit échantillon à au moins deux hauteurs.

6. Procédé de fabrication de récipients (1) selon l'une quelconque des revendications 1 à 5, **caractérisé en ce que** lors du conditionnement thermique, chaque repère (7) apposé sur la préforme (2) est en vis-à-vis d'un moyen de chauffe (410), en particulier en vis-à-vis du moyen de chauffe (410) auquel il est associé.

7. Installation de fabrication de récipients (1) en matière thermoplastique mettant en œuvre un procédé selon l'une quelconque des revendications 1 à 6, lesdits récipients (1) pouvant présenter différents formats (3), chaque format (3) de récipient (1) présentant au moins trois sections (8) le long de la hauteur (9) du récipient (1), ladite installation comprenant :
- une unité de chauffe (4) comprenant au moins un module de chauffe (41), ledit module de chauffe (41) comprenant plusieurs moyens de chauffe (410) positionnés les uns au-dessus des autres,
- une unité de formage (5) de récipients (1), comprenant au moins un poste de formage (51), ledit poste de formage (51) incluant chacun un moule à l'empreinte d'un récipient (1), et au moins un dispositif d'injection (52) d'un fluide sous pression dans la préforme (2),
**caractérisée en ce que**
elle comprend des moyens d'étalonnage (10) comprenant des moyens d'apposition, sur un échantillon de préforme (2), d'au moins deux repères (7) distants l'un de l'autre le long de la hauteur dudit échantillon et des moyens d'attribution (11) de chacun des moyens de chauffe (410) à au moins une des trois sections (8) en fonction de la position des repères (7) sur ledit récipient (1) obtenu à la sortie (56) de l'unité de formage (5).

8. Installation selon la revendication 7, **caractérisée en ce qu'**elle comprend une unité de contrôle (6) de l'épaisseur de la paroi des récipients (1) à au moins deux niveaux de hauteur (9), ladite unité de contrôle (6) comprenant des moyens de détection (61), lesdits moyens de détection (61) comprenant au moins deux capteurs (610) situés l'un au-dessus de l'autre chacun à un niveau de hauteur (9) respectif dudit récipient (1) et ladite unité de contrôle (6) comprenant un système de commande automatique (62).

9. Installation selon la revendication 8, **caractérisée en ce que** l'unité de contrôle (6) comprend les moyens d'attribution (11) et les moyens de détection (61).

10. Installation selon l'une quelconque des revendications 7 à 9, **caractérisée en ce que** les moyens d'étalonnage (10) comprennent des moyens de marquage laser d'au moins deux repères (7) sur la circonférence de l'échantillon.

11. Installation selon l'une quelconque des revendications 7 à 10, **caractérisée en ce que**, dans l'unité de conditionnement, chaque repère (7) sur l'échantillon est en vis-à-vis d'un moyen de chauffe (410), en particulier en vis-à-vis du moyen de chauffe (410) auquel il est associé.

## Patentansprüche

1. Verfahren zur Herstellung von Behältern (1) aus Vorformlingen (2), wobei die Behälter (1) unterschiedliche Formate (3) aufweisen können, wobei jedes Format (3) eines Behälters (1) mindestens drei Abschnitte (8) entlang der Höhe (9) des Behälters (1) aufweist, wobei das Verfahren mindestens die folgenden Schritte umfasst:
- thermisches Konditionieren eines Vorformlings (2) aus einem thermoplastischen Material, wobei das thermische Konditionieren durch mindestens eine Heizeinheit (4) ausgeführt wird, die mindestens ein Heizmodul (41) umfasst, wobei das Heizmodul (41) mehrere übereinander angeordnete Heizmittel (410) umfasst;
- Blasformen oder Streckblasformen des Behälters (1) mittels einer Umformungseinheit (5) zum Umformen von Behältern (1);
wobei das Verfahren **dadurch gekennzeichnet ist, dass** es einen Kalibrierungsschritt für mindestens eines der Formate (3) eines Behälters (1) umfasst, der die folgende Abfolge von Aktionen umfasst:
- Bereitstellen eines Musters eines Vorformlings (2) für das Format (3);
- Anbringen von mindestens zwei entlang der Höhe des Musters verteilten Markierungen (7) auf dem Muster, wobei jede der mindestens zwei Markierungen (7) mindestens einem Heizmittel (410) zugeordnet ist;
- thermisches Konditionieren des Musters und Blasformen des Musters, um einen Behälter (1) gemäß dem Format (3) zu erhalten,
- Erfassen der Position der Markierungen (7) auf dem erhaltenen Behälter (1);
- Zuweisen jedes der Heizmittel (410) zu mindestens einem der drei Abschnitte (8) in Abhängigkeit von der Position der Markierungen (7) auf dem erhaltenen Behälter (1).

2. Verfahren nach Anspruch 1, **dadurch gekennzeichnet, dass** es einen Schritt des Kontrollierens der Dicke der Wand (101) der Behälter (1) an den Abschnitten (8) umfasst, wobei das Kontrollieren mittels einer Kontrolleinheit (6) ausgeführt wird, wobei die Einheit Detektionsmittel (61) umfasst, die mindestens zwei Sensoren (610) umfassen, und wobei der Schritt des Kontrollierens das Vergleichen des Dickenmaßes mit einem Sollwert umfasst.

3. Verfahren nach Anspruch 2, wobei bei mindestens einem Abschnitt (8) die Dicke durch den ihm entsprechenden Sensor (610) an der unteren Grenze (810) und/oder der oberen Grenze (820) des Abschnitts (8) gemessen wird.

4. Verfahren nach Anspruch 2 oder 3, **dadurch gekennzeichnet, dass** es einen automatischen Schritt des Einstellens der Leistung mindestens eines Heizmittels (410) in Abhängigkeit von der für den Abschnitt (8), dem das Mittel zugewiesen ist, gemessenen Dicke umfasst.

5. Verfahren zur Herstellung von Behältern (1) nach einem der Ansprüche 1 bis 4, **dadurch gekennzeichnet, dass** der Schritt des Anbringens von Markierungen (7) an dem Muster darin besteht, eine Lasermarkierung am Umfang des Musters auf mindestens zwei Höhen vorzunehmen.

6. Verfahren zur Herstellung von Behältern (1) nach einem der Ansprüche 1 bis 5, **dadurch gekennzeichnet, dass** bei der thermischen Konditionierung jede an dem Vorformling (2) angebrachte Markierung (7) gegenüber einem Heizmittel (410) liegt, insbesondere gegenüber dem Heizmittel (410), dem sie zugeordnet ist.

7. Anlage zur Herstellung von Behältern (1) aus thermoplastischem Material, die ein Verfahren nach einem der Ansprüche 1 bis 6 durchführt, wobei die Behälter (1) unterschiedliche Formate (3) aufweisen können, wobei jedes Format (3) eines Behälters (1) mindestens drei Abschnitte (8) entlang der Höhe (9) des Behälters (1) aufweist, wobei die Anlage Folgendes umfasst:
- eine Heizeinheit (4), die mindestens ein Heizmodul (41) umfasst, wobei das Heizmodul (41) mehrere übereinander angeordnete Heizmittel (410) umfasst,
- eine Umformungseinheit (5) zum Umformen von Behältern (1), die mindestens eine Umformungsstation (51) umfasst, wobei die Umformungsstation (51) jeweils ein Formwerkzeug mit dem Formnest für einen Behälter (1) und mindestens eine Einspritzvorrichtung (52) zum Einspritzen eines Fluids unter Druck in den Vorformling (2) beinhaltet;
**dadurch gekennzeichnet, dass**
sie Kalibrierungsmittel (10) umfasst, die Mittel zum Anbringen von mindestens zwei entlang der Höhe des Musters voneinander beabstandeten Markierungen (7) auf einem Muster eines Vorformlings (2) und Zuweisungsmittel (11) zum Zuweisen jedes der Heizmittel (410) zu mindestens einem der drei Abschnitte (8) in Abhängigkeit von der Position der Markierungen (7) auf dem am Ausgang (56) der Umformungseinheit (5) erhaltenen Behälter (1) umfassen.

8. Anlage nach Anspruch 7, **dadurch gekennzeichnet, dass** sie eine Kontrolleinheit (6) zum Kontrollieren der Dicke der Wand der Behälter (1) auf mindestens zwei Höhenniveaus (9) umfasst, wobei die Kontrolleinheit (6) Detektionsmittel (61) umfasst, wobei die Detektionsmittel (61) mindestens zwei Sensoren (610) umfassen, die übereinander jeweils auf einem jeweiligen Höhenniveau (9) des Behälters (1) angeordnet sind, und wobei die Kontrolleinheit (6) ein automatisches Steuersystem (62) umfasst.

9. Anlage nach Anspruch 8, **dadurch gekennzeichnet, dass** die Kontrolleinheit (6) die Zuweisungsmittel (11) und die Detektionsmittel (61) umfasst.

10. Anlage nach einem der Ansprüche 7 bis 9, **dadurch gekennzeichnet, dass** die Kalibrierungsmittel (10) Mittel zur Lasermarkierung von mindestens zwei Markierungen (7) am Umfang des Musters umfassen.

11. Anlage nach einem der Ansprüche 7 bis 10, **dadurch gekennzeichnet, dass** in der Konditionierungseinheit jede Markierung (7) auf dem Muster gegenüber einem Heizmittel (410) liegt, insbesondere gegenüber dem Heizmittel (410), dem sie zugewiesen ist.

## Claims

1. Method for producing containers (1) from preforms (2), said containers (1) being able to have different formats (3), each format (3) of container (1) having at least three sections (8) along the height (9) of the container (1), the method comprising at least the following steps of:
- thermally conditioning a preform (2) made of a thermoplastic material, said thermal conditioning being performed by at least one heating unit (4) comprising at least one heating module (41), said heating module (41) comprising several heating means (410) positioned one above the other;
- blow-moulding or stretch-blow-moulding the container (1) by means of a forming unit (5) for the forming of containers (1);
said method being **characterized in that** it comprises a calibration step for at least one of the formats (3) of container (1), comprising the following actions in succession:
- supplying a sample preform (2) for said format (3);
- applying to said sample at least two reference markings (7) distributed along the height of said sample, each of the at least two reference markings (7) being associated with at least one heating means (410);
- thermal conditioning of said sample and blowing of said sample in order to obtain a container (1) to said format (3),
- capturing of the position of the reference markings (7) on said container (1) obtained;
- attributing of each of the heating means (410) to at least one of the three sections (8) according to the position of the reference markings (7) on said container (1) obtained.

2. Method according to Claim 1, **characterized in that** it comprises a step of controlling the wall thickness of the wall (101) of the containers (1) at the sections (8), said control being performed by means of a control unit (6), said unit comprising detection means (61) comprising at least two sensors (610), and the control step involving comparing said thickness measurement against a setpoint value.

3. Method according to Claim 2 wherein, for at least one section (8), the thickness is measured by its corresponding sensor (610) at the lower limit (810) and/or at the upper limit (820) of said section (8).

4. Method according to Claim 2 or 3, **characterized in that** it comprises an automatic step of regulating the power of at least one heating means (410) on the basis of the measured thickness for the section (8) to which said means is attributed.

5. Method for producing containers (1) according to any one of Claims 1 to 4, **characterized in that** the step of applying reference markings (7) to the sample consists in laser marking the circumference of said sample at a minimum of two heights.

6. Method for producing containers (1) according to any one of Claims 1 to 5, **characterized in that**, during the thermal conditioning, each reference marking (7) applied to the preform (2) faces a heating means (410), and in particular faces the heating means (410) with which it is associated.

7. Facility for producing thermoplastic containers (1), implementing a method according to any one of Claims 1 to 6, said containers (1) being able to have different formats (3), each format (3) of container (1) having at least three sections (8) along the height (9) of the container (1), said facility comprising:
- a heating unit (4) comprising at least one heating module (41), said heating module (41) comprising several heating means (410) positioned one above the other,
- a forming unit (5) for the forming of containers (1), this unit comprising at least one forming station (51), said forming station (51) each including a mould, the moulding cavity of which matches a container (1), and at least one injection device (52) for injecting a pressurized fluid into the preform (2),
**characterized in that**
it comprises calibration means (10) comprising means for applying, to a sample preform (2), at least two reference markings (7) that are distant from one another along the height of said sample, and attribution means (11) for attributing each of the heating means (410) to at least one of the three sections (8) on the basis of the position of the reference markings (7) on said container (1) obtained at the exit (56) of the forming unit (5).

8. Facility according to Claim 7, **characterized in that** it comprises a control unit (6) for controlling the wall thickness of the wall of the containers (1) at a minimum of two height levels (9), said control unit (6) comprising detection means (61), said detection means (61) comprising at least two sensors (610) situated one above the other each at a respective height level (9) of said container (1), and said control unit (6) comprising an automatic control system (62).

9. Facility according to Claim 8, **characterized in that** the control unit (6) comprises the attribution means (11) and the detection means (61).

10. Facility according to any one of Claims 7 to 9, **characterized in that** the calibration means (10) comprise means for laser marking at least two reference markings (7) on the circumference of the sample.

11. Facility according to any one of Claims 7 to 10, **characterized in that**, in the conditioning unit, each reference marking (7) on the sample faces a heating means (410), and in particular faces the heating means (410) with which it is associated.
